(19) Europäisches Patentamt
European Patent Office
Office européen des brevets

(11) **EP 2 092 659 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **06828513.9**

(22) Anmeldetag: **15.11.2006**

(51) Int Cl.:
*H04B 3/23* (2006.01)          *H04M 3/00* (2006.01)
*H04M 9/08* (2006.01)

(86) Internationale Anmeldenummer:
**PCT/DE2006/002006**

(87) Internationale Veröffentlichungsnummer:
**WO 2008/058492 (22.05.2008 Gazette 2008/21)**

(54) **VERFAHREN UND ANORDNUNG ZUM ADAPTIVEN FILTERN VON SIGNALEN**

METHOD AND ARRANGEMENT FOR THE ADAPTIVE FILTERING OF SIGNALS

PROCÉDÉ ET DISPOSITIF POUR LE FILTRAGE ADAPTATIF DE SIGNAUX

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**26.08.2009 Patentblatt 2009/35**

(73) Patentinhaber: **Siemens Enterprise Communications GmbH & Co. KG
81379 München (DE)**

(72) Erfinder:
• **BAUER, Wolfgang
1220 Wien (AT)**
• **WURZ, Johann
3910 Zwettl (AT)**

(74) Vertreter: **Fritzsche, Thomas
Fritzsche Patent
Naupliastrasse 110
81545 München (DE)**

(56) Entgegenhaltungen:
**WO-A1-00/72556          US-A- 5 483 594
US-B1- 6 226 380**

**Beschreibung**

Die Erfindung betrifft ein Verfahren zum adaptiven Filtern von Signalen gemäß dem Oberbegriff des Anspruchs 1 sowie eine Anordnung zum adaptiven Filtern von Signalen gemäß dem Gattungsbegriff des Anspruchs 12.

Es ist bekannt, zur Realisierung einer adaptiven Filterung ein Ausgangssignal eines, insbesondere als Referenz verwendeten, Filters als Referenzsignal zum Vergleich mit einem Ausgangssignal eines die adaptive Filterung durchführenden Filters heranzuziehen und auf Grundlage von Ergebnissen des Vergleichs Parameter des adaptiven Filters anzupassen.

Bei bekannten adaptiven Filtern werden hierzu unterschiedliche Ansätze verfolgt. Beispielsweise sehen einige adaptive Filter einen Kompromiss vor, bei dem bei fixer Adaptionsgeschwindigkeit zwischen einer Anforderung möglichst schnell zu adaptieren, wenn nur das Echo vorhanden ist, und einer Anforderung beim Gegensprechen den adaptiven Filter nicht zu verstellen, wobei dies umso häufiger auftritt, je höher die A-daptionsgeschwindigkeit ist.

Insbesondere bei dem Einsatz des adaptiven Filters bei so genannten Echo-Cancellern, welche vor allem in der Telekommunikation und insbesondere bei Sprachübertragung über auf dem Internet Protokoll (IP) basierenden Netzen - dem so genannten Voice over IP (VoIP) - eingesetzt werden, besteht das Problem, dass dem Referenzsignal stark variierende Störsignale überlagert sind. Man spricht bei diesem Einsatzgebiet auch vom so genannten Double-Talk (Gegensprechen), also dem gleichzeitigen Sprechen zweier entfernter Kommunikationsteilnehmer, bei dem das Referenzsignal die Überlagerung von lokalen Signalen, den so genannten Near-End-Signalen des lokalen Teilnehmers, und dem Echo hiervon von der entfernten Teilnehmerseite darstellt.

Ein optimales Adaptionsverhalten erfordert daher, dass die Geschwindigkeit der Adaption an das Verhältnis von Referenzsignal zu Störsignal angepasst wird, wobei hierzu in der Regel der Pegel des Referenzsignals bestimmt werden muss.

Hierzu ist beispielsweise aus der EP 1 320 941 B1 bekannt, einen Verstärkungsfaktor zwischen einem als Referenzsignal verwendeten auf der Übertragungsstrecke auftretenden Restecho und einem entfernten, so genannten Far-End-, Signal zu schätzen und hieraus den Pegel des Restechos zu bestimmen. Andere Verfahren wiederum beruhen auf einer Schätzung des Restechos auf Grundlage der Korrelation zwischen Near-End-Signalen und den Far-End-Signalen.

Aus der US 6,226,380 B1 ist ein Verfahren sowie eine. Anordnung bekannt, welches die Unterscheidung zwischen Echo-Pfad Änderungen und Double-Talk Bedingungen im Rahmen einer Echo-Cancelation ermöglicht.

Es ist die Aufgabe der vorliegenden Erfindung, ein insbesondere für die Echo Cancellation optimiertes Verfahren sowie Anordnung zum adaptiven Filtern anzugeben.

Diese Aufgabe von dem Verfahren wird ausgehend von den Merkmalen des Oberbegriffs des Anspruchs 1 durch dessen kennzeichnende Merkmale sowie durch die Anordnung gemäß dem Gattungsbegriff des Anspruchs 12 durch dessen kennzeichnendes Merkmal gelöst.

Nach erfindungsgemäßen Verfahren erfolgt eine Bestimmung eines Pegels eines zur adaptiven Filterung notwendigen Referenzsignals im Rahmen der Adaption durch Schätzung anhand einer zum Referenzsignal äquivalenten Größe, wobei die Filterung abhängig von der elektrischen Leistung zumindest eines einem zu filternden Übertragungskanal entnommenen Signals erfolgt und die äquivalente Größe durch eine mathematische Funktion auf Grundlage der elektrischen Leistung zumindest des entnommenen Signals ermittelt wird. Unter Leistung versteht man hierbei in der digitalen Signalverarbeitung den so genannten quadratischen Mittelwert, weil dies auch die Grundlage einer Leistungsberechnung darstellt.

Erfindungsgemäβ verwendet zur Ermittlung der äquivalenten Größe die mathematische Funktion vorteilhafter Weise eine sich aus einem vom lokalen Teilnehmer abgegebenen Signal ($S_{in}$) und einem Echosignal des Übertragungskanals ergebende erste Leistung, da diese Signale bereits gute Indikatoren darstellen.

Alternativ oder auf vorteilhafte Weise ergänzend ist eine weitere iterbild zur Ermittlung der äquivalent Größe derart ermittelt Erfindungsgemäβ wind die, dass die mathematische Funktion eine sich aus einem vom lokalen Teilnehmer abgegebenen Signal und einem aus einem Echosignal des Übertragungskanals und einem kompensierten Echosignal erzeugten Differenzsignals ergebende zweite Leistung verwendet.

Erfindungsgemäβ lässt sich eine weitere vorteilhafte Optimierung erzielen, wenn zur Ermittlung der äquivalenten Größe die mathematische Funktion eine durch das adaptive Filter geschätzte dritte Leistung des Echosignals des Übertragungskanals verwendet.

Bei Einsatz des erfindungsgemäßen Verfahrens zur Echo Cancellation ist von Vorteil, dass durch die mathematische Funktion die Ermittlung der äquivalenten Größe als eine Schätzung einer vierten Leistung des Echosignals des Übertragungskanals realisiert ist, wobei diese auf Grundlage der ersten Leistung, zweiten Leistung und dritten Leistung geschätzt wird, da eine auf diesen drei Größen basierender Schätzung die Wirksamkeit der Adaption erhöht,

Bevorzugt ist die Schätzung dabei gemäß der Formel

$$P_{Echo,est} = P_{diff} \cdot \sqrt{\frac{P_{Sin}}{P_{est}}}$$

mit

$$P_{diff} = \frac{1}{2} \cdot \left( P_{Sin} - \dot{P}_{err} \right)$$

definiert, wobei mit

$P_{Sin}$ die erste Leistung,
$P_{err}$ die zweite Leistung,
$P_{est}$ die dritte Leistung und
$P_{Echo,est}$ die vierte Leistung

bezeichnet ist. Eine Schätzung gemäß vorstehender Formel weist sehr gute Eigenschaften bzgl. der Schnelligkeit und Wirksamkeit einer adaptiven Filterung auf, insbesondere beim Einsatz des erfindungsgemäßen Verfahrens für Echo Cancellation Aufgaben, da sie wie in Simulationen ermittelt, eine hervorragend genaue Schätzung des Referenzsignals ermöglicht.

Wird der adaptive Filter als Echo Canceller betrieben und wird der adaptive Filter auf Grundlage einer Bilanzierung einer fünften Leistung an der ein Echoauslöschungssignal zur Erzeugung des Ausgangsignals des adaptiven Filters verwendenden Summierstelle in einen Anfangszustand der Adaption zurückgesetzt, werden Echoänderungen, die sonst schwer von der durch gleichzeitiges Sprechen von Teilnehmern verursachten Double-Talk Störung zu unterscheiden ist, wesentlich besser erfasst. Durch das Erkennen und Rücksetzen wird eine Neuadaption des Filters rechtzeitig dann gestartet, wenn durch Echoänderungen eine Verstimmung des Adaptionsvorgangs, d.h. ein Erzeugen von fehlerhaften Koeffizienten, droht.

Vorzugsweise erfolgt dabei die Rücksetzung durch Überschreiten eines ersten Schwellwertes durch den absoluten Betrag einer fünften Leistung, so dass weitere Freiheitsgrade in der Optimierung des Verfahrens darin bestehen, einen besonders geeigneten Schwellwert zu setzen, wobei dies durch Simulationen oder durch experimentelle Probeläufe realisiert sein kann.

Bei einer weiteren vorteilhaften Weiterbildung des Verfahrens erfolgt die Rücksetzung, wenn die Dauer der Überschreitung ununterbrochen einen zweiten einen Zeitraum wiedergebenden Schwellwert erreicht. Hierdurch werden nur kurzzeitig auftretende Spitzen aufgefangen und verhindert, dass diese ungerechtfertigt eine Neuadaption auslösen. Zudem bietet dies ebenfalls eine Möglichkeit für das Verfahren durch geschickte Wahl bzw. Einstellung des zweiten Schwellwertes die Erkennungsrate zu verbessern, wobei dies wiederum durch Simulationen oder durch experimentelle Probeläufe realisiert sein kann.

Bei einer Weiterbildung wird der erste Schwellwert auf Grundlage eines zu einer Indizierung eines Double-Talk proportionalen Wertes sowie auf Grundlage der zweiten Leistung und dritten Leistung festgelegt. Hierdurch wird vorteilhaft der Freiheitsgrad des ersten Schwellwertes dahingehend optimal ausgenutzt, dass er auf Grundlage aktuell auftretender Größen, wie die bei der Weiterbildung genannten, automatisch justiert und angepasst ist, so dass Fehlerkennungen deutlich minimiert bis nahe zu eliminiert werden, wobei sich eine Weiterbildung als besonders vorteilhaft herausstellt, bei der die Festlegung des ersten Schwellwertes gemäß der Formel

$$P_{\Delta} = s \cdot \sqrt{\left( P_{est} \cdot P_{err} \right)}$$

definiert ist, wobei mit

$s$ der zur Indizierung proportionale Wert,
$Perr$ die zweite Leistung,

$P_{est}$ die dritte Leistung und

$P_{\Delta}$ die vierte Leistung

bezeichnet ist.

Der erfindungsgemäße adaptiver Filter unterstützt auf vorteilhafte Weise die Realisierung des erfindungsgemäßen Verfahrens durch Mittel zur Durchführung der vorstehend beschriebenen Verfahrensweisen.

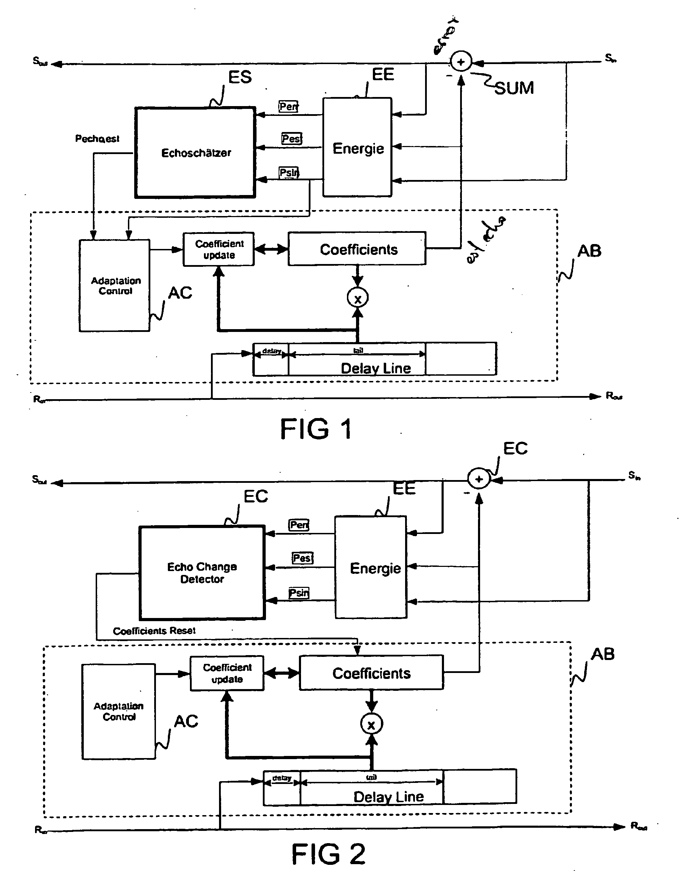

Weitere Einzelheiten sowie Vorteile der Erfindung werden ausgehend von in den Figuren 1 und 2 dargestellten Ausführungsbeispielen näher erläutert. Dabei zeigt

Figur 1 ein Blockschaltbild eines das erfindungsgemäße Verfahren umsetzenden Echo Cancellers, welcher zur Optimierung ermittelte Leistungen zur Referenzsignalschätzung nutzt,

Figur 2 ein Blockschaltbild eines das erfindungsgemäße Verfahren umsetzenden Echo Cancellers, welcher zur Optimierung ermittelte Leistungen zur leistungsbilanzbasierten Erkennung von Echoänderungen und Steuerung des Cancellers nutzt.

In Figur 1 ist das Blockschaltbild eines das erfindungsgemäße Verfahren umsetzenden Echo Cancellers dargestellt, welcher zur Optimierung ermittelte Leistungen zur Referenzsignalschätzung nutzt.

In der schematischen Darstellung ist daher ein zwischen dem Echopfad, d.h. dem Pfeil zwischen einem ersten Port $S_{Out}$, auf dem auf den Echopfad ein zu sendendes Sprachsignal abgegeben wird, und einem zweiten Port $S_{in}$, auf dem ein Echosignal vom Echopfad ankommt, sowie einem dritten Port $R_{in}$, auf dem zu empfangende Sprachsignale vom Echopfad eingehen und über einen vierten Port $R_{Out}$ an den Echopfad abgegeben werden, ein erfindungsgemäß ausgestalteter Echo Canceller dargestellt.

Dargestellt ist weiter ein eine adaptive Filterung realisierender Adaptionsblock AB, der für die Adaption notwendige Koeffizienten und hierauf basierend ein Ausgangssignal, ein geschätztes Echosignal, erzeugt, welches zum Zwecke der Auslöschung eines Echos an einen Summierer SUM geleitet wird, wo es vom auf dem Echopfad über den zweiten Port $S_{Out}$ empfangenen echobehafteten Signal abgezogen wird und vom Echo im Idealfall vollständig bereinigt über den ersten Port $S_{Out}$ abgegeben wird.

Zu erkennen ist ferner, dass der Adaptionsblock die hierzu erforderlichen aus dem Stand der Technik bekannten Verarbeitungsblöcke aufweist, wobei zur Umsetzung des erfindungsgemäßen Verfahrens zumindest die Adaptionssteuerung AC modifiziert ist.

Zur Steuerung des Adaptionsblocks AB werden, wie der Darstellung zu entnehmen, der Adaptionssteuerung AC neben weiteren üblichen Signalen die Leistung eines mittels erfindungsgemäßen Verfahren geschätzten Echosignals $P_{echo,est}$ sowie die Leistung eines Near-End-Signals $P_{sin}$ zugeführt.

Aufgrund dieser Signale ist es der Adaptionssteuerung AC möglich, optimal angepasste Koeffizienten zu berechnen, welche eine verbesserte Echo Cancellation ermöglichen.

Erfindungsgemäß wird dazu mittels eines dargestellten Energieermittlers EE aus einem Ausgangsignal, welches sich aus Restecho und einem Signal vom Near-End-Teilnehmer zusammensetzt, einem Near-Endsignal, welches sich aus Echo und dem Signal vom Near-End-Teilnehmer zusammensetzt, sowie aus dem geschätzten Echosignal die Leistungspegel $P_{Sin}$, $P_{err}$, $P_{est}$ der genannten Signale ermittelt und an eine erfindungsgemäß ausgestaltete Einrichtung zur Schätzung ES übermittelt.

Die Echoschätzeinrichtung ES schätzt hierauf auf der Formel

$$P_{Echo,est} = P_{diff} \cdot \sqrt{\frac{P_{Sin}}{P_{est}}}$$

beruhend, mit

$$P_{diff} = \frac{1}{2} \cdot (P_{Sin} - P_{err})$$

die Leistung des Echos, welche wie oben erläutert, der Adaptionssteuerung AS als Steuerungsgrundlage dient.

Die Figur 2 zeigt ebenfalls ein Blockschaltbild eines Echo Cancellers, bei dem die identischen Elemente entsprechend der vorherigen Figurenbeschreibung mit der gleichen Bezeichnung versehen sind.

Im Gegensatz zum vorher Beschriebenen nutzt der in dieser Darstellung gezeigte das erfindungsgemäße Verfahren umsetzende Echo Canceller zur Optimierung ermittelte Leistungen zur leistungsbilanzbasierten Erkennung von Echoänderungen und Steuerung des Cancellers.

Hierzu weist das dargestellte Ausführungsbeispiel der Erfindung ebenfalls einen Energieermittler auf, der aus den gleichen, oben genannten Signalen, die gleichen Leistungspegel $P_{Sin}$, $P_{err}$, $P_{est}$ erzeugt.

Im Unterschied zum ersten Ausführungsbeispiel werden diese alternativ oder ergänzend zu einer Zuführung an einen Echoschätzer an eine Detektionseinrichtung zur Detektion von Echoänderungen weitergegeben, welche die Leistungspegel $P_{Sin}$, $P_{err}$, $P_{est}$ gemäß

$$P_{\Delta} = P_{err} + P_{est} - P_{Sin}$$

mit

$$P_{\Delta} = s \cdot \sqrt{(P_{est} \cdot P_{err})}$$

bilanziert, wobei s Ergebnis einer groben Erkennung eines Gegensprechen-Effektes, der auch als "Double Talk" bezeichnet wird. Hiermit wird eine Bilanzierung an der Summierstelle SUM des Echo Cancellers durchgeführt, die den Anforderungen, welche die G168-2004 an einen Line-Echo-Canceller stellt, voll gerecht wird, da sie eine Erkennung von Echoänderungen und eine gegebenenfalls erforderliche Neuadaption innerhalb weniger Sekunden ermöglicht. Außerdem zeichnet sich dieses Verfahren dadurch aus, dass sehr geringe Rechenleistung nötig ist und somit auch bei Anwendungen mit hohen Kanalzahlen optimale Funktion gewährleistet.

**Patentansprüche**

1. Verfahren zum adaptiven Filtern, bei dem eine Bestimmung eines Pegels eines zur adaptiven Filterung notwendigen Referenzsignals im Rahmen der Adaption durch Schätzung anhand einer zum Referenzsignal äquivalenten Größe ($P_{\Delta}$, $P_{Echo,est}$) erfolgt, wobei

   a) die Filterung abhängig von der elektrischen Leistung ($P_{Sin}$, $P_{err}$, $P_{est}$) zumindest eines einem zu filternden Übertragungskanals entnommenen Signals ($S_{in}$, $S_{out}$, $R_{in}$, $R_{out}$) erfolgt,
   b) die äquivalente Größe ($P_{\Delta}$, $P_{Echo,est}$) durch eine mathematische Funktion auf Grundlage der elektrischen Leistung ($P_{Sin}$, $P_{err}$, $P_{est}$) zumindest des entnommenen Signals ($S_{in}$, $S_{out}$, $R_{in}$, $R_{out}$) ermittelt wird,
   **dadurch gekennzeichnet, dass**
   zur Ermittlung der äquivalenten Größe ($P_{\Delta}$, $P_{Echo,est}$) die mathematische Funktion eine sich aus einem vom lokalen Teilnehmer abgegebenen Signal ($S_{in}$) und einem Echosignal des Übertragungskanals ergebende erste Leistung ($P_{sin}$), eine sich aus einem vom lokalen Teilnehmer abgegebenen Signal ($S_{in}$) und einem aus einem Echosignal des Übertragungskanals und einem kompensierten Echosignal erzeugten Differenzsignals ergebende zweite Leistung ($P_{err}$), und eine durch das adaptive Filter geschätzte dritte Leistung ($P_{est}$) verwendet, und
   c) durch die mathematische Funktion eine Schätzung einer vierten Leistung ($P_{Echo,est}$) des Echosignals des Obertragungskanals realisiert wird, wobei diese auf Grundlage der ersten Leistung ($P_{sin}$), zweiten Leistung ($P_{err}$) und dritten Leistung ($P_{est}$) geschätzt wird.

2. Verfahren nach dem Anspruch 1, **dadurch gekennzeichnet, dass** die Schätzung gemäß der Formel

$$P_{Echo,est} = P_{diff} \cdot \sqrt{\frac{P_{Sin}}{P_{est}}}$$

mit

$$P_{diff} = \frac{1}{2} \cdot \left( P_{Sin} - P_{err} \right)$$

definiert ist, wobei mit

$P_{Sin}$ die erste Leistung,
$P_{err}$ die zweite Leistung,
$P_{est}$ die dritte Leistung und
$P_{Echo,est}$ die vierte Leistung

bezeichnet ist.

**3.** Verfahren nach einem der vorhergehenden Ansprüche, **dadurch gekennzeichnet, dass**

a) der adaptive Filter als Echo Canceller betrieben wird,
b) der adaptive Filter auf Grundlage einer Bilanzierung einer fünften Leistung ($P_\Delta$) an der ein Echoauslöschungssignal zur Erzeugung des Ausgangsignals ($S_{Out}$) des adaptiven Filters verwendenden Summierstelle in einen Anfangszustand der Adaption zurückgesetzt wird.

**4.** Verfahren nach dem vorhergehenden Anspruch, **dadurch gekennzeichnet, dass** die Rücksetzung durch Überschreiten eines ersten Schwellwertes ($P_{\Delta,max}$) durch den absoluten Betrag einer fünften Leistung ($P_\Delta$) erfolgt.

**5.** Verfahren nach dem vorhergehenden Anspruch, **dadurch gekennzeichnet, dass** die Rücksetzung erfolgt, wenn die Dauer der Überschreitung ununterbrochen einen zweiten einen Zeitraum wiedergebenden Schwellwert erreicht.

**6.** Verfahren nach einem der beiden vorhergehenden Ansprüche, **dadurch gekennzeichnet, dass** der erste Schwellwert ($P_{\Delta,max}$) auf Grundlage eines zu einer Indizierung eines Double-Talk proportionalen Wertes (s) sowie auf Grundlage der zweiten Leistung ($P_{err}$) und dritten Leistung ($P_{est}$) festgelegt wird.

**7.** Verfahren nach dem vorhergehenden Anspruch, **dadurch gekennzeichnet, dass** die Festlegung des ersten Schwellwertes ($P_{\Delta,Max}$) gemäß der Formel

$$P_\Delta = s \cdot \sqrt{\left( P_{est} \cdot P_{err} \right)}$$

definiert ist, wobei mit

$s$ der zur Indizierung proportionale Wert,
$P_{err}$ die zweite Leistung,
$P_{est}$ die dritte Leistung und
$P_\Delta$ die vierte Leistung

bezeichnet ist.

**8.** Adaptiver Filter **gekennzeichnet durch** Mittel zur Durchführung des Verfahrens nach einem der vorhergehenden Ansprüche.

**Claims**

**1.** Method for adaptive filtering in which a determination of a level of a reference signal needed for adaptive filtering occurs in the context of adaptation by estimation by means of a variable equivalent to the reference signal ($P_\Delta$, $P_{Echo,est}$), wherein

a) the filtering occurs dependently on the electrical output ($P_{Sin}$, $P_{err}$, $P_{est}$) at least of a signal taken from a transmission channel to be filtered ($S_{in}$, $S_{out}$, $R_{in}$, $R_{out}$),

b) the equivalent variable ($P_\Delta$, $P_{Echo,est}$) is calculated by a mathematical function on the basis of the electrical output ($P_{sin}$, $P_{err}$, $P_{est}$) at least of the signal taken ($S_{in}$, $S_{out}$, $R_{in}$, $R_{out}$), **characterised in that** to establish the equivalent variable ($P_\Delta$, $P_{Echo,est}$) the mathematical function uses a first output ($P_{Sin}$) arising from a signal ($S_{in}$) emitted by the local subscriber and an echo signal of the transmission channel, a second output ($P_{err}$) arising from a signal ($S_{in}$) emitted by the local subscriber and a differential signal generated from an echo signal of the transmission channel and a compensated echo signal, and a third output ($P_{est}$) estimated by the adaptive filter, and

c) by means of the mathematical function, an estimation of a fourth output ($P_{Echo,est}$) of the echo signal of the transmission channel is carried out, wherein this is estimated on the basis of the first output ($P_{Sin}$), second output ($P_{err}$) and third output ($P_{est}$).

2. Method according to claim 1 **characterised in that** the estimation is defined according to the formula

$$P_{Echo,est} = P_{diff} \cdot \sqrt{\frac{P_{Sin}}{P_{est}}}$$

where

$$P_{diff} = \frac{1}{2} \cdot \left( P_{Sin} - P_{err} \right)$$

wherein the following designations apply:

$P_{Sin}$ the first output,
$P_{err}$ the second output,
$P_{est}$ the third output and
$P_{Echo,est}$ the fourth output.

3. Method according to any one of the preceding claims **characterised in that**

a) the adaptive filter is operated as an echo canceller,

b) the adaptive filter is reset to an initial state of the adaptation, on the basis of a balancing of a fifth output ($P_\Delta$) at the totalling point using an echo cancellation signal to generate the starting signal ($S_{out}$) of the adaptive filter.

4. Method according to the preceding claim **characterised in that** the reset occurs by an overstep of a first threshold value ($P_{\Delta,max}$) by the absolute amount of a fifth output ($P_\Delta$).

5. Method according to the preceding claim **characterised in that** the reset occurs where the duration of the overstep reaches without interruption a second threshold value reflecting a period of time.

6. Method according to one of the two preceding claims **characterised in that** the first threshold value ($P_{\Delta,max}$) is defined on the basis of a value (s) proportional to an indexing of a double talk and on the basis of the second output ($P_{err}$) and third output ($P_{est}$).

7. Method according to the preceding claim **characterised in that** the establishment of the first threshold ($P_{\Delta,max}$) is defined according to the formula

$$P_\Delta = s \cdot \sqrt{\left( P_{est} \cdot P_{err} \right)}$$

wherein the following designations apply:

S the value proportional to the indexing,
$P_{err}$ the second output,
$P_{est}$ the third output and
$P_{\Delta}$ the fourth output.

8. Adaptive filter **characterised by** means to carry out the method according to any one of the preceding claims.

**Revendications**

1. Procédé servant au filtrage adaptatif, dans lequel un niveau d'un signal de référence nécessaire au filtrage adaptatif est défini dans le cadre de l'adaptation par évaluation à l'aide d'une grandeur ($P_{\Delta}$, $P_{Echo,est}$) équivalente au signal de référence, sachant que

a) le filtrage est effectué en fonction de la puissance électrique ($P_{Sin}$, $P_{err}$, $P_{est}$) d'au moins un signal ($S_{in}$, $S_{out}$, $R_{in}$, $R_{out}$) prélevé d'un canal de transmission devant être filtré,
b) la grandeur ($P_{\Delta}$, $P_{Echo,est}$) équivalente est déterminée par une fonction mathématique sur la base de la puissance électrique ($P_{sin}$, $P_{err}$, $P_{est}$) d'au moins le signal prélevé ($S_{in}$, $S_{out}$, $R_{in}$, $R_{out}$),
**caractérisé en ce**
**qu'**aux fins de la détermination de la grandeur équivalente ($P_{\Delta}$, $P_{Echo,est}$), la fonction mathématique utilise une première puissance ($P_{Sin}$) résultant d'un signal ($S_{in}$) émis par l'abonné local et d'un signal d'écho du canal de transmission, une deuxième puissance ($P_{err}$) résultant d'un signal ($S_{in}$) émis par l'abonné local et d'un signal de différence généré à partir d'un signal d'écho du canal de transmission et d'un signal d'écho compensé, et une troisième puissance ($P_{est}$) évaluée par le filtrage adaptatif, et
c) en ce que la fonction mathématique permet de réaliser une évaluation d'une quatrième puissance ($P_{Echo,est}$) du signal d'écho du canal de transmission, sachant que ladite quatrième puissance est évaluée sur la base de la première puissance ($P_{Sin}$), de la deuxième puissance ($P_{err}$) et de la troisième puissance ($P_{est}$).

2. Procédé selon la revendication 1, **caractérisé en ce que** l'évaluation est définie selon la formule

$$P_{Echo,est} = P_{diff} \cdot \sqrt{\frac{P_{Sin}}{P_{est}}}$$

avec

$$P_{diff} = \frac{1}{2} \cdot \left( P_{Sin} - P_{err} \right)$$

sachant que

$P_{Sin}$ désigne la première puissance,
$P_{err}$ désigne la deuxième puissance
$P_{est}$ désigne la troisième puissance, et
$P_{Echo,est}$ désigne la quatrième puissance.

3. Procédé selon l'une quelconque des revendications précédentes, **caractérisé en ce que**

a) le filtrage adaptatif fonctionne comme un compensateur d'écho,

b) le filtrage adaptatif est réinitialisé dans un état de départ de l'adaptation sur la base d'un bilan relatif à une cinquième puissance ($P_\Delta$) à un endroit d'addition utilisant un signal de suppression d'écho aux fins de la génération du signal de sortie ($S_{out}$) du filtre adaptatif.

4. Procédé selon la revendication précédente, **caractérisé en ce que** la réinitialisation est effectuée en dépassant une première valeur seuil ($P_{\Delta,max}$) par la valeur absolue d'une cinquième puissance ($P_\Delta$).

5. Procédé selon la revendication précédente, **caractérisé en ce que** la réinitialisation a lieu lorsque la durée du dépassement atteint sans interruption une deuxième valeur seuil reproduisant un intervalle de temps.

6. Procédé selon l'une quelconque des deux revendications précédentes, **caractérisé en ce que** la première valeur seuil ($P_{\Delta,max}$) est déterminée sur la base d'une valeur (s) proportionnelle à l'indexation d'une superposition de signaux vocaux ainsi que sur la base de la deuxième puissance ($P_{err}$) et de la troisième puissance ($P_{est}$).

7. Procédé selon la revendication précédente, **caractérisé en ce que** la détermination de la première valeur seuil ($P_{\Delta,max}$) est définie selon la formule

$$P_\Delta = s \cdot \sqrt{(P_{est} \cdot P_{err})} \quad ,$$

sachant que

s désigne la valeur proportionnelle à l'indexation,

$P_{err}$ désigne la deuxième puissance,

$P_{est}$ désigne la troisième puissance et

$P_\Delta$ désigne la quatrième puissance.

8. Filtre adaptatif, **caractérisé par** des moyens servant à la mise en oeuvre dudit procédé selon l'une quelconque des revendications précédentes.

**FIG 1**

**FIG 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1320941 B1

- US 6226380 B1